# EUROPEAN PATENT SPECIFICATION

(11) **EP 2 737 890 B1**
(45) Date of publication and mention of the grant of the patent: **22.08.2018**
(21) Application number: 12818298.7
(22) Date of filing: 27.07.2012
(51) Int. Cl.: A61J 3/00, A61J 1/10, B32B 9/00, B65D 65/02, B65D 30/02, A01N 1/02

(54) **RED-BLOOD-CELL STORAGE CONTAINER**
LAGERBEHÄLTER FÜR ERYTHROZYTEN
CONTENANT DE STOCKAGE DE GLOBULES ROUGES

(30) Priority: 28.07.2011 JP 2011165185
(43) Date of publication of application: 04.06.2014
(73) Proprietor: Terumo Kabushiki Kaisha, Tokyo 151-0072 (JP)
(72) Inventor: TAKEDA Norihiko, Fujinomiya-shi, Shizuoka, (JP); KOYAMA Miyuki, Ashigarakami-gun, Kanagawa 259-0151 (JP)
(74) Representative: TBK
(86) International application number: PCT/JP2012/069204
(87) International publication number: WO 2013/015420

(56) References cited:
- EP-A1- 1 258 234
- WO-A1-2011/043503
- JP-A- 1 020 854
- JP-A- H01 171 562
- JP-A- H05 500 319
- JP-A- 2001 046 361
- JP-A- 2001 231 841
- JP-A- 2003 171 288
- JP-A- 2004 089 495
- JP-A- 2004 089 495
- US-A- 5 037 419
- YASUHARU OHGOE ET AL: "HEMOLYSIS OF DLC FILMS COATED ON POLYMERIC MATERIALS", CARBON CONFERENCE 2001 , THE AMERICAN CARBON SOCIETY, HELD IN LEXINGTON, KY, vol. 5.6, 15 July 2001 (2001-07-15), pages 1-2, XP055156227,
- YASUHARU OHGOE ET AL: "Hemolytic Properties of DLC Films Deposited on Polymeric Materials", TANSO, vol. 2002, no. 202, 1 January 2002 (2002-01-01), pages 71-76, XP055156225, ISSN: 0371-5345, DOI: 10.7209/tanso.2002.71

## Description

### TECHNICAL FIELD

The present invention relates to a blood cell storage container used for storing concentrated red blood cells.

### BACKGROUND ART

One representative material constituting red blood cell storage containers is soft polyvinyl chloride (hereinafter, called "soft PVC") containing a plasticizer such as di(2-ethylhexyl)phthalate (DEHP). Although soft PVC has been problematic for disposal after use, it remains the predominant material for red blood cell storage containers. The major reason for this is, in storing red blood cells, DEHP has an effect of leaching from soft PVC and permeating into the components of red blood cells, preventing morphological change and hemolyzation of red blood cells, which effect cannot be expected for other polymers that do not contain DEHP, for example, polyethylene and polypropylene. However, dioxin produced in the disposal process of soft PVC will continue to be a critical issue; thus, the need for non-soft PVC for red blood cell storage containers has been increasing.

Furthermore, in recent years, Europe-originated Registration, Evaluation, Authorisation and Restriction of Chemicals (REACH) has designated DEHP as one of the substances of very high concern for its risk for causing endocrine disruption (reproductive toxicity) depending on the quantity. This has been bolstering the need for non-soft PVC for red blood cell storage containers.

Different proposals for a non-soft PVC material for red blood cell storage containers have been made, for example, Patent Literature 1 describes that a plastic composition of non-PVC plastic and citrate ester has an action to prevent hemolyzation of red blood cells. Also described for non-PVC are polyolefin copolymer composed of a mid-block composed of rubbery polyolefin copolymer and a polystyrene end-block, and polypropylene.

### CITATION LIST

### PATENT LITERATURE

Patent Literature 1: JP 03-502298 W

EP1258234 (A1) discloses a plastic container for liquid medicine, which, concerning the effective components of liquid medicine, is capable of prevention of deterioration in quality due to mixing of oxygen and water vapor, prevention of variation in concentration due to water volatilization and moisture absorption, etc. A plastic container for liquid medicine, which is a plastic container internally coated with DLC (diamond-like carbon) film wherein water vapor permeability is 0-0.006 g/container/day and oxygen permeability is 0-0.011 ml/container/day, such properties being obtained by optimizing the three conditions, composition, density and film thickness of the DLC film.

JP2001046361 (A) describes a therapeutic container being constituted by forming a hard carbon film on the inside wall surface of the container formed of a plastic material. The hard carbon film is a diamond-like carbon film and the container has at least one aperture. Also, the container is a medicinal liquid container or blood specimen collection container and the container is a blood specimen collection tube. Further, the container is a vacuum blood specimen collection tube.

WO2011043503 (A1) discloses a diamond-like carbon thin film containing silicon, a preparation method thereof, and a use thereof, wherein the diamond-like carbon thin film containing silicon is characterized by a chemical bond between the carbon and silicon atoms present on the surface of the thin film and the atom (A) giving hydrophilicity to the surface of the thin film, on the surface of the diamond-like carbon thin film containing silicon inside and on the surface.

### SUMMARY OF INVENTION

### TECHNICAL PROBLEM

However, the plastic compositions described in Patent Literature 1 actually have not reached a satisfactory level for preventing hemolysis with insufficient storability for red blood cells.

The present invention addresses the above-mentioned needs with an object of providing a red blood cell storage container, made of a plasticizer-free, non-soft PVC material, excellent in storing red blood cells, and facilitating disposal thereof.

### SOLUTION TO PROBLEM

To solve the above-mentioned problems, a red blood cell storage container of the present invention is characterized as defined in claim 1. Further beneficial embodiments are disclosed in pending claims 2 to 8. Use of the red blood cell storage container of the present invention is disclosed in claim 9.

According to the above configuration, the diamond-like carbon coating part, formed on the inner surface of the container body that is made of a resin composition free of plasticizers such as DEHP, prevents hemadsorption of concentrated red blood cells stored in the container, thus preventing morphological change and hemolyzation of the red blood cells. This is attributed to the reduced surface tension of the inner surface of the container body by forming the coating layer made of diamond-like carbon thereon. Furthermore, the non-soft PVC composition of the container body and coating part does not produce dioxin when the container is disposed of.

A red blood cell storage container of the present invention is filled with a red blood cell preservative.

According to the above configuration, the filling of the red blood cell preservative in the container further prevents morphological change and hemolyzation of the red blood cells.

A red blood cell storage container of the present invention is, in addition to a red blood cell preservative in the container, filled with an anti-hemolytic agent and a surfactant, an HLB value of the surfactant is preferably at least 13 and a number of oxyethylene groups in a hydrophilic moiety of the surfactant molecular structure is preferably at least 20, the hydrophilic moiety of the surfactant molecular structure consists preferably of polyoxyethylene sorbitan; the anti-hemolytic agent is preferably vitamin E; and the red blood cell preservative is preferably a mixed solution containing mannitol, glucose, adenine, and sodium chloride.

According to the above configuration, by using a predetermined surfactant, anti-hemolytic agent, and red blood cell preservative, morphological change and hemolyzation of red blood cells are further prevented.

### ADVANTAGEOUS EFFECTS OF INVENTION

According to the present invention, a red blood cell storage container that is made of a plasticizer-free non-soft PVC material, excellent in storing red blood cells, and facilitates disposal thereof, can be provided.

### BRIEF DESCRIPTION OF DRAWINGS

FIG. 1 is a schematic view showing a configuration of a blood bag system where a red blood cell storage container of the embodiment is used.
FIG. 2(a) is a cross-sectional view taken along X-X line of the red blood cell storage container of FIG. 1; FIG. 2(b) is a partial cross-sectional view showing another embodiment of FIG. 2(a).
FIG. 3 is a schematic view showing another embodiment of the blood bag system where the red blood cell storage container of the embodiment is used.
FIG. 4 is a graph showing the time course of hemolysis rates in different red blood cell storage containers.

### DESCRIPTION OF EMBODIMENTS

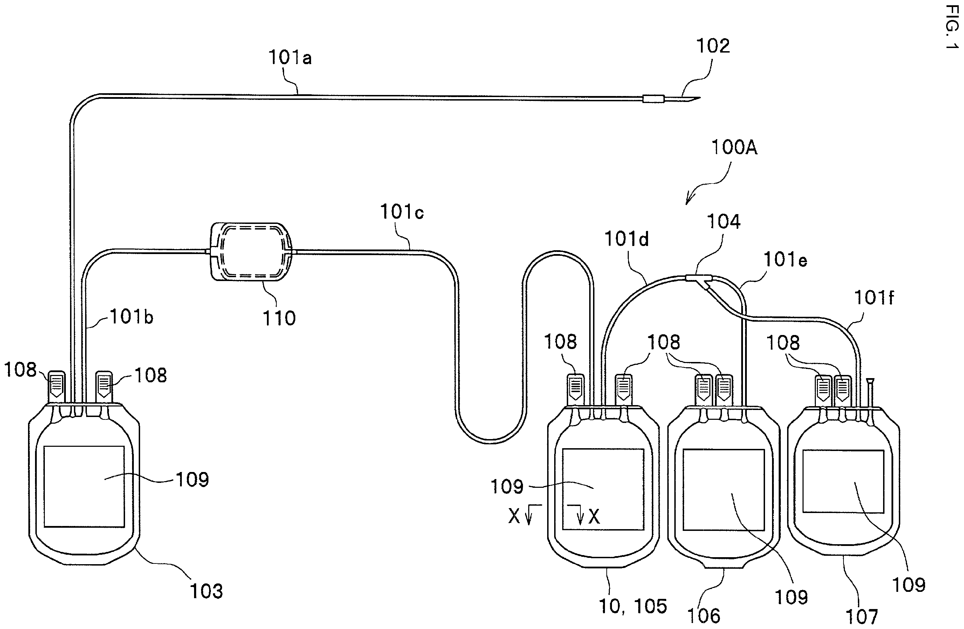

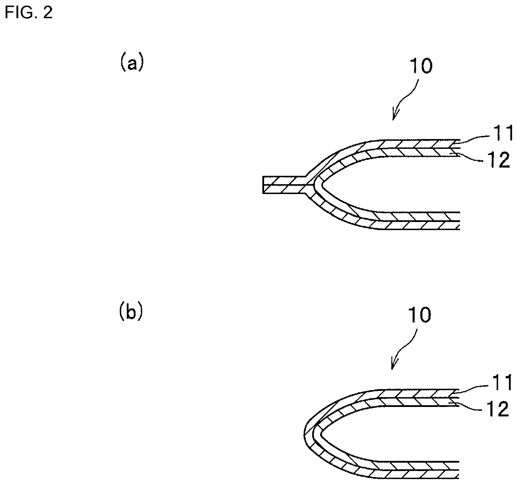

Embodiments of a red blood cell storage container of the present invention will now be described in detail with reference to the drawings. As shown in FIGS. 1, 2(a), and 2(b), red blood cell storage container 10 includes container body 11 and coating part 12 formed on an inner surface of container body 11. Red blood cell storage container 10 may further include outlet 108 communicating with an inside of the container and used for discharging stored red blood cells (concentrated red blood cells) and tubes 101c, 101d, for connecting to other container (s) or bag (s). Although not shown, red blood cell storage container 10 may also include an air vent having a hydrophobic filter when increased rigidity is desirable.

### (Container body)

Container body 11 is made of a resin composition consisting of at least one of polyolefin polymer, polyamide polymer, polyurethane polymer, polystyrene polymer, polybutadiene polymer, polyester polymer, fluoropolymer, polycarbonate polymer, polyacrylic polymer, and polysulfone polymer. Container body 11 is not limited to a mono-layered body consisting of the resin composition, but may be a multilayered body composed of multiple layers respectively consisting of the resin composition different from each other (not shown). Thus, by making container body 11 of a resin composition(s) other than PVC (polyvinyl chloride), the risk of producing dioxin in the disposal process of red blood cell storage container 10 is eliminated.

Here, polyolefin polymer includes PE (polyethylene), PP (polypropylene), COP (cycloolefin polymer), CCP (cycloolefin copolymer), EVA (ethylene vinyl acetate copolymer). Polyamide polymer includes PA (polyamide) such as nylon. Polyurethane polymer includes PU (polyurethane). Polystyrene polymer includes PSt (polystyrene) and PESt (ethylene-styrene copolymer). Polybutadiene polymer includes PB (polybutadiene), ABS (acrylonitrile-butadiene-styrene copolymer), SEBS (block(polystyrene-ethylene butylene copolymer-polystyrene)); polyester polymer includes PET (polyethylene terephthalate), PBT (polybutylene terephthalate), PEN (polyethylene naphthalate). Fluoropolymer includes PTFE (polytetrafluoroethylene), ETFE (ethylene-tetrafluoroethylene copolymer). Polycarbonate polymer includes PC (polycarbonate) Polyacrylic polymer includes PMMA (poly(methyl methacrylate)), PMA (poly(methyl acrylate)), PAN (polyacrylonitrile). Polysulfone polymer includes PS (polysulfone), PES (polyethersulfone).

### (Coating part)

Coating part 12 is made of diamond-like carbon, which has an effect of preventing hemadsorption. With this coating part 12 made of diamond-like carbon, it is possible to improve the red blood cell storability of red blood cell storage container 10 without using DEHP as a substances of very high concern.

Red blood cell storage container 10 is not limited in terms of the shape of the container, but a shape of a bag or a bottle is preferable. A volume of the container is preferably 100 to 600 mL. A thickness of the container (a total thickness of container body 11 and coating part 12) is preferably 0.05 to 1.0 mm, and more preferably 0.08 to 0.8 mm. Here, a thickness of coating part 12 is 0.005 to 5 µm, preferably 0.005 to 2 µm, and more preferably 0.01 to 1 µm. If the thickness of coating part 12 is less than 0.005 µm, the hemadsorption prevention effect is insufficient, thus red blood cell storability tends to decrease. Or, if the thickness of coating part 12 exceeds 5 µm, coating part 12 becomes so hard that cracks can generate during manufacture of the container, which cracks can facilitate adsorption of red blood cells, thus red blood cell storability is subject to decrease.

Red blood cell storage container 10 is manufactured by a conventionally known method as described below. First, said resin composition as a component of container body 11 is extruded via a T-die or a circular die to obtain flat sheet, tube-shaped sheet, or a parison, which are made into container body 11 in a shape of a bag or a bottle by use of appropriate techniques such as thermoforming, blow molding, drawing, cutting, and fusion (heat seal).

Next, coating part 12 is formed on an inner surface of container body 11 through chemical vapor deposition (CVD), preferably plasma CVD. Alternatively to CVD, physical vapor deposition (PVD) may be used to form coating part 12.

In plasma CVD, container body 11 is set inside a decompression chamber (not shown) and a source gas containing raw material (carbon) of coating part 12 is introduced into the decompression chamber. Following this, high frequency or the like is applied inside the chamber in order to facilitate a chemical reaction of the source gas, and the source gas is transformed into a state of plasma. As a result, radicals of the source material (carbon) formed by the chemical reaction deposit onto the inner surface of container body 11 to form coating part 12.

For operation of plasma CVD, the reduced pressure of 0.05 to 5.00 Torr (6.5 to 650 Pa) and high frequency of 100 kHz to 1000 MHz are preferable. For the source gas, an aliphatic hydrocarbon gas, aromatic hydrocarbon gas, oxygen-containing hydrocarbon gas, or nitrogen-containing hydrocarbon gas alone, or a mixture of two or more gases is preferable. Optionally, a source gas may be diluted with an inert gas for use. A thickness of coating part 12 is preferably 0.005 to 5 µm. The deposition time will be adjusted so that this thickness is obtained.

FIG. 2(a) exemplifies formation of, firstly, container body 11 out of a flat sheet by fusion, and subsequently, coating part 12 on an inner surface of container body 11. FIG. 2(b) exemplifies formation of, firstly, container body 11 out of a tube-shaped sheet or a parison by blow molding, and subsequently, coating part 12 on an inner surface of container body 11.

The red blood cell storage container 10 is filled
with an additive for concentrated red blood cells including the red blood cell preservative plus an anti-hemolytic agent and a surfactant (hereinafter, called "additive" as needed) when storing red blood cells (concentrated red blood cells) therein. Thus,
the additive is added to the concentrated red blood cells stored in red blood cell storage container 10. The amount of
additive to be added is 40 to 60 mL per 100 mL of concentrated red blood cells, or 20 to 30 mL per 100 mL of collected blood. It should be noted that, hereinafter, a product of concentrated red blood cells with a red blood cell preservative or an additive will be called "red blood cell product."

### (Red blood cell preservative)

For a red blood cell preservative, a conventional known preservative used for long-term storage of concentrated red blood cells is employed. A red blood cell preservative includes ACD solution, CPD solution, MAP solution, SAGM solution, OPTISOL (registered trademark) (AS-5), ADSOL (AS-1), Nutricel (AS-3), PAGG-S and SAGP-maltose. Especially, MAP solution, SAGM solution, or PAGG-S is preferable. MAP solution is a mixed solution containing mannitol, glucose, adenine, phosphate, citrate, and sodium chloride. SAGM solution is a mixed solution containing mannitol, glucose, adenine, and sodium chloride. PAGG-S is a mixed solution containing sorbitol, glucose, adenine, guanosine, phosphate, and sodium chloride.

The amount of red blood cell preservative to be added is 40 to 60 mL per 100 mL of concentrated red blood cells, or 20 to 30 mL per 100 mL of collected blood. If the amount to be added is less than the lower-limit value, it will become difficult to prevent impairment of erythrocyte membranes. If the amount to be added exceeds the upper-limit value, prevention of erythrocyte membrane impairment is not remarkably improved, and can lead to cost increase.

### (Anti-hemolytic agent)

An anti-hemolytic agent is for preventing impairment of erythrocyte membranes via an anti-oxidation effect and affinity for the lipid of erythrocyte membranes; specifically, vitamin E or an unsaturated linear hydrocarbon selected from the group consisting of 7-tetradecene, 8-octadecene, 9-eicosene, and squalene, is preferable. Vitamin E includes tocopherols such as α-tocopherol, β-tocopherol, γ-tocopherol, and δ-tocopherol, as well as tocotrienols such as α-tocotrienol, β-tocotrienol, γ-tocotrienol, and δ-tocotrienol, among which α-tocopherol is preferable. Also, vitamin E may be esters of these tocopherols or tocotrienols, preferably compounds of ester acetate, particularly a tocopherol acetate.

A concentration of an anti-hemolytic agent in an additive when added together with a surfactant, is preferably 75 to 300 ppm, considering a preferable concentration thereof in a red blood cell product being 25 to 100 ppm. If the concentration is lower than 75 ppm, prevention of impairment of erythrocyte membranes will become difficult. Specifically, the hemolysis preventive rate is subject to reduce; in other words, the amount of free plasma Hb tends to increase. If the concentration exceeds 300 ppm, remarkable improvement in prevention of erythrocyte membrane impairment will decline, and can lead to cost increase.

### (Surfactant)

A surfactant has a helper effect for an anti-hemolytic agent for its even diffusion in a red blood cell preservative and coating erythrocyte membranes, and itself is capable of preventing impairment of erythrocyte membranes. To this end, a surfactant has an HLB value of 13 or more, preferably 13 to 20, and a number of oxyethylene groups (EO counts) in a hydrophilic moiety of molecular structure thereof is 20 or more, preferably 20 to 40. Also, the surfactant preferably has a molecular structure where the hydrophilic moiety consists of polyoxyethylene (PEO), which is a first pattern, or polyoxyethylene sorbitan (PEO sorbitan), which is a second pattern.

If the HLB value is less than 13, the surfactant does not diffuse in the additive, thus the impairment of erythrocyte membranes cannot be prevented. If the EO counts do not reach 20, the molecular weight of the hydrophilic moiety of the surfactant is low, thus the impairment of erythrocyte membranes cannot be prevented. If the HLB value exceeds 20 or the EO counts exceed 40, prevention of erythrocyte membrane impairment will not improve remarkably, and can lead to cost increase. The HLB values were obtained by measuring via Griffin's method and calculating via the formula: HLB value = (20 x sum of formula weight of hydrophilic moiety)/(surfactant molecular weight).

Surfactants of a first pattern include, for example, polyoxyethylene oleyl ether (EMULGEN (registered trademark) 430) and polyoxyethylene lauryl ether (EMULGEN 130K)

Surfactants of a second pattern include, for example, polyoxyethylene sorbitan monooleate (Tween (registered trademark) 80), polyoxyethylene sorbitan monostearate (Tween 60) and polyoxyethylene sorbitan monolaurate (Tween 20).

A concentration of a surfactant in an additive when added together with an anti-hemolytic agent, is preferably 300 to 900 ppm, considering a preferable concentration thereof in a red blood cell product being 100 to 300 ppm. If the concentration is lower than 300 ppm, prevention of impairment of erythrocyte membranes will become difficult. Specifically, the hemolysis preventive rate is subject to reduce; in other words, the amount of free plasma Hb tends to increase. If the concentration exceeds 900 ppm, prevention of erythrocyte membrane impairment will become difficult, and can lead to cost increase.

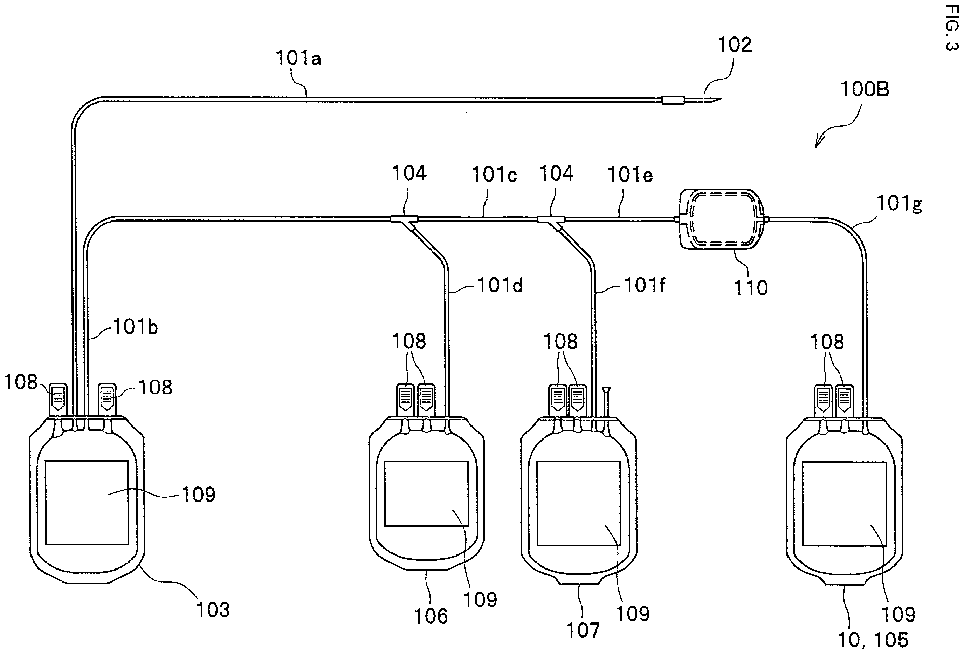

A blood bag system using a red blood cell storage container of the present invention will now be described. As shown in FIG. 3, red blood cell storage container 10 is equivalent to blood storage bag 105 in blood bag system 100A.

Blood bag system 100A includes: blood collecting bag 103 that is filled with blood collected from a blood provider (donor) via blood collection tube 101a having blood collection needle 102 on its end; blood processing filter 110 for separating predetermined blood components (white blood cells and platelets) from the blood (whole blood) transmitted via tube 101b from blood collecting bag 103; blood storage bag 105 for collecting blood removed of the predetermined blood components by passing through blood processing filter 110 via tube 101c; blood storage bag 106 to which a blood component (plasma) of an upper layer, centrifuged in blood storage bag 105, is transmitted via tubes 101d, 101e and branch tube 104; and drug filled bag 107 filled with said red blood cell preservative or additive, the red blood cell preservative or additive being transmitted from drug filled bag 107 via tubes 101f, 101d and branch tube 104 to blood storage bag 105, and added to a blood component (concentrated red blood cells) of a lower layer, centrifuged in blood storage bag 105.

Each of blood collecting bag 103, blood storage bags 105, 106, and drug filled bag 107 has a volume of, for example, about 100 to 600 mL.

Also, an upper part of each of blood collecting bag 103, blood storage bags 105, 106, and drug filled bag 107 is provided with outlet 108. Also, each of blood collecting bag 103, blood storage bags 105, 106, and drug filled bag 107 is attached with label 109 for indicating the blood component filled therein. Tubes 101b to 101f are provided with a passage blocking member (not shown) as needed. The passage blocking member is mounted in a state blocking (sealing) the passage of a tube, and opens the passage by breaking. Furthermore, usually blood collecting bag 103 is filled with an anticoagulant. Such anticoagulant may be ACD solution or CPD solution.

Now, a blood bag system, which differs from blood bag system 100A in terms of the arrangement of components, will be described. As shown in FIG. 3, red blood cell storage container 10 is equivalent to blood storage bag 105 in blood bag system 100B.

Blood bag system 100B includes: blood collecting bag 103 that is filled with blood collected from a blood provider (donor) via blood collection tube 101a having blood collection needle 102 on its end; blood storage bag 106 to which a blood component (plasma) of an upper layer, centrifuged in blood collecting bag 103, is transmitted via tubes 101b, 101d and branch tube 104; blood processing filter 110 for separating predetermined blood components (white blood cells and platelets) from a blood component (concentrated red blood cells) of a lower layer, transmitted from blood collecting bag 103 via tubes 101b, 101c, and 101e; blood storage bag 105 for collecting concentrated red blood cells removed of the predetermined blood components by passing through blood processing filter 110 via tube 101g; and drug filled bag 107 filled with said red blood cell preservative or additive, the red blood cell preservative or additive being transmitted from drug filled bag 107 via tubes 101f, 101e, blood processing filter 110, and tube 101g to blood storage bag 105, and added to the concentrated red blood cells in blood storage bag 105. Except for the above, blood bag system 100B is the same as blood bag system 100A.

### EXAMPLES

### (Comparative Example 0)

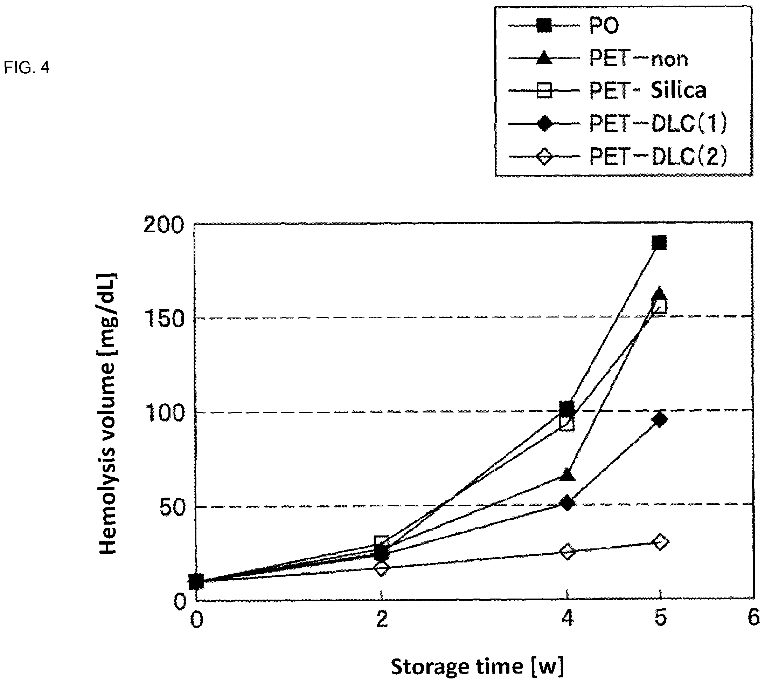

As a red blood cell storage container, a bag-shaped polyethylene terephthalate container with a coating part consisting of 0.02 µm diamond-like carbon was used (volume: 250 mL, MITSUBISHI HEAVY INDUSTRIES, LTD.). A red blood cell product was prepared by mixing 20 mL of red blood cell preservative (SAGM solution) and 40 mL of concentrated red blood cells, and was stored in the red blood cell storage container for 5 weeks maintained at 4°C. The hemolysis rate of the red cell product (i.e. , the amount of free plasma Hb) was measured before storage, 2 weeks, 4 weeks, and 5 weeks following storage, to be used in the following LCV method as an assessment criterion of red blood cell storability. The result is shown in FIG. 4 (PET-DLC (1)).

### (LCV method)

The amount of free plasma Hb (hemoglobin) is measured according to the following procedures:
(1) Twenty (20) mg of Leuco Crystal Violet is dissolved in 75 mL of acetone, and then 20 mL of acetate and 25 mL of RO water are added to the mixture and mixed with stirring, and the resulting mixture is used as a coloring reagent.
(2) To 1mL of 30wt% hydrogen peroxide solution is added 30 mL of RO water and mixed, and the resulting mixture is used as a coloring substrate solution.
(3) Upon completion of storing red blood cell product, the red blood cell product is centrifuged to collect a supernatant, which serves as a sample for measuring the amount of free plasma hemoglobin. At the same time, a hemoglobin standard solution for generating a calibration curve (a calibration curve sample) having a concentration of 2 to 300 mg/dL is prepared by diluting a hemoglobin standard solution (Alfresa Pharma Corporation, "HemoCon-N") with RO water.
(4) To a tube, 6 mL of the coloring reagent and 25 µL of the measurement sample or the calibration curve sample are added and stirred well.
(5) To the mixture above, 1 mL of the coloring substrate solution is added and stirred, and the resulting mixture is incubated in a water-jet thermostat bath for 20 minutes at 37°C.
(6) Upon completion of incubation, the absorption at 590 nm is measured using a spectrophotometer (U-3010, Hitachi, Ltd.); a hemoglobin level is calculated from a value of the calibration curve sample measured at the same time, so that the amount of free plasma hemoglobin is determined.

### (Example 1)

To 100 mL of SAGM solution, 60 mg of surfactant (Tween 80, HLB value: 15, EO counts: 20) and 15 mg of anti-hemolytic agent (vitamin E: tocopherol acetate) were added together to make an additive. Red blood cell product was prepared by mixing 20 mL of said additive and 40 mL of concentrated red blood cells. Here, the concentration of anti-hemolytic agent was 50 ppm and that of surfactant was 200 ppm in the red blood cell product. The red blood cell product was stored in a red blood cell storage container, similar to that in comparative Example 0, for 5 weeks maintained at 4°C. The hemolysis rate was measured in the same manner as in comparative Example 0, and the result is shown in FIG. 4 (PET-DLC (2)).

### (Comparative example 1)

Except that a bag-shaped polyolefin container (KAWASUMI LABORATORIES. INC., grade: PO-80) was used as a red blood cell storage container, comparative example 1 was performed in the same manner as comparative Example 0. The hemolysis rate was measured in the same manner as in comparative Example 0, and the result is shown in FIG. 4 (PO).

### (Comparative example 2)

Except that a bag-shaped polyethylene terephthalate container without a coating part (Toyo Seikan Co., Ltd.) was used as a red blood cell storage container, comparative example 2 was performed in the same manner as comparative Example 0. The hemolysis rate was measured in the same manner as in comparative Example 0, and the result is shown in FIG. 4 (PET-non).

### (Comparative example 3)

Except that a bag-shaped polyethylene terephthalate container with a coating part consisting of 0.02 µm silica part (Toyo Seikan Co., Ltd.) was used as a red blood cell storage container, comparative example 3 was performed in the same manner as comparative Example 0. The hemolysis rate was measured in the same manner as in comparative Example 0, and the result was shown in FIG. 4 (PET-silica).

As shown in FIG. 4, Examples 1
(PET-DLC (2)) satisfying the requirements of the present invention resulted in lower hemolysis rates or better red blood cell storability after 5-week' s storing compared to comparative example 0 (PET-DLC (1), comparative example 1 (PO), comparative example 2 (PET-non), and comparative example 3 (PET-silica) which failed to satisfy the requirements of the present invention.

### REFERENCE SIGNS LIST

- 10: Red blood cell storage container
- 11: Container body
- 12: Coating part
- 100A, 100B: Blood bag systems
- 103: Blood collecting bag
- 105: Blood storage bag
- 106: Blood storage bag
- 107: Drug filled bag
- 110: Blood processing filter

## Claims

1. A red blood cell storage container comprising:
a container body made of a resin composition comprising at least one of: polyolefin polymer, polyamide polymer, polyurethane polymer, polystyrene polymer, polybutadiene polymer, polyester polymer, fluoropolymer, polycarbonate polymer, polyacrylic polymer, and polysulfone polymer;
a coating part, formed on an inner surface of the container body and made of diamond-like carbon;
wherein the red blood cell storage container is **characterized in that** a red blood cell preservative, an anti-hemolytic agent and a surfactant are filled in the container, and **in that** the resin composition is free of plasticizer.

2. The red blood cell storage container according to claim 1, wherein the resin composition consists of polyester polymer.

3. The red blood cell storage container according to claim 2, wherein the polyester polymer includes polyethylene terephthalate.

4. The red blood cell storage container according to claim 1, wherein, an HLB value of the surfactant is 13 or more and a number of oxyethylene groups in a hydrophilic moiety of the surfactant's molecular structure is 20 or more.

5. The red blood cell storage container according to claim 4, wherein, the hydrophilic moiety of the surfactant's molecular structure consists of polyoxyethylene sorbitan.

6. The red blood cell storage container according to claim 1, wherein, the anti-hemolytic agent is vitamin E.

7. The red blood cell storage container according to any one of claims 1 to 6, wherein, the red blood cell preservative is a mixed solution containing mannitol, glucose, adenine, and sodium chloride.

8. The red blood cell storage container according to any one of claims 1 to 7, wherein the thickness of coating part is 0.005 to 5 µm.

9. Use of the red blood cell storage container according to any one of claims 1 to 8 to store red blood cells therein.

## Patentansprüche

1. Lagerbehälter für rote Blutkörperchen umfassend:
einen Behälterkörper hergestellt aus einer Harzzusammensetzung umfassend zumindest eins von: Polyolefinpolymer, Polyamidpolymer, Polyurethanpolymer, Polystyrolpolymer, Polybutadienpolymer, Polyesterpolymer, Fluoropolymer, Polycarbonatpolymer, Polyacrylpolymer, und Polysulfonpolymer;
einen an einer inneren Oberfläche des Behälterkörpers gebildeten und aus diamantartigem Kohlenstoff hergestellten Beschichtungsteil;
wobei der Lagerbehälter für rote Blutkörperchen **dadurch gekennzeichnet ist, dass** ein rotes Blutkörperchenkonservierungsmittel, ein antihämolytischer Wirkstoff und ein Tensid in den Behälter gefüllt sind, und dass die Harzzusammensetzung frei von Weichmachern ist.

2. Lagerbehälter für rote Blutkörperchen nach Anspruch 1, wobei die Harzzusammensetzung aus Polyesterpolymer besteht.

3. Lagerbehälter für rote Blutkörperchen nach Anspruch 2, wobei das Polyesterpolymer Polyethylenterephthalat beinhaltet.

4. Lagerbehälter für rote Blutkörperchen nach Anspruch 1, wobei ein HLB-Wert des Tensids 13 oder mehr ist und eine Anzahl an OxyethylenGruppen in einem hydrophilen Teil der Molekularstruktur des Tensids 20 oder mehr ist.

5. Lagerbehälter für rote Blutkörperchen nach Anspruch 4, wobei der hydrophile Teil der Molekularstruktur des Tensids aus Polyoxyethylensorbitan besteht.

6. Lagerbehälter für rote Blutkörperchen nach Anspruch 1, wobei der anti-hämolytische Wirkstoff Vitamin E ist.

7. Lagerbehälter für rote Blutkörperchen nach einem der Ansprüche 1 bis 6, wobei das rote Blutkörperchenkonservierungsmittel eine gemischte Lösung enthaltend Mannitol, Glucose, Adenin und Natriumchlorid ist.

8. Lagerbehälter für rote Blutkörperchen nach einem der Ansprüche 1 bis 7, wobei die Dicke des Beschichtungsteils 0,005 bis 5 µm ist.

9. Verwendung des Lagerbehälters für rote Blutkörperchen nach einem der Ansprüche 1 bis 8, um rote Blutkörperchen darin zu lagern.

## Revendications

1. Récipient pour le stockage de globules rouges comprenant :
un corps de récipient fait d'une composition de résine comprenant au moins l'un parmi : un polymère de polyoléfine, un polymère de polyamide, un polymère de polyuréthane, un polymère de polystyrène, un polymère de polybutadiène, un polymère de polyester, un polymère fluoré, un polymère de polycarbonate, un polymère polyacrylique, et un polymère de polysulfone ;
une partie de revêtement, formée sur une surface intérieure du corps de récipient et faite en carbone de type diamant ;
lequel récipient pour le stockage de globules rouges est **caractérisé en ce qu'**un conservateur pour globules rouges, un agent anti-hémolytique et un tensioactif sont introduits dans le récipient, et **en ce que** la composition de résine est exempte de plastifiant.

2. Récipient pour le stockage de globules rouges selon la revendication 1, dans lequel la composition de résine consiste en un polymère de polyester.

3. Récipient pour le stockage de globules rouges selon la revendication 2, dans lequel le polymère de polyester comprend du poly(téréphtalate d'éthylène).

4. Récipient pour le stockage de globules rouges selon la revendication 1, dans lequel l'indice HLB du tensioactif est de 13 ou plus et le nombre de groupes oxyéthylène dans un fragment hydrophile de la structure moléculaire du tensioactif est de 20 ou plus.

5. Récipient pour le stockage de globules rouges selon la revendication 4, dans lequel le fragment hydrophile de la structure moléculaire du tensioactif consiste en sorbitan polyoxyéthyléné.

6. Récipient pour le stockage de globules rouges selon la revendication 1, dans lequel l'agent anti-hémolytique est la vitamine E.

7. Récipient pour le stockage de globules rouges selon l'une quelconque des revendications 1 à 6, dans lequel le conservateur pour globules rouges est une solution mixte contenant du mannitol, du glucose, de l'adénine, et du chlorure de sodium.

8. Récipient pour le stockage de globules rouges selon l'une quelconque des revendications 1 à 7, dans lequel l'épaisseur de la partie de revêtement est de 0,005 à 5 µm.

9. Utilisation du récipient pour le stockage de globules rouges selon l'une quelconque des revendications 1 à 8 pour le stockage de globules rouges dans celui-ci.
